# EUROPÄISCHE PATENTSCHRIFT

(11) **EP 0 485 937 B1**
(45) Veröffentlichungstag und Bekanntmachung des Hinweises auf die Patenterteilung: **28.09.1994**
(21) Anmeldenummer: 91119202.9
(22) Anmeldetag: 12.11.1991
(51) Int. Cl.: B65G 47/08, B65G 47/29

(54) **Gruppiereinrichtung**
Grouping device
Dispositif de groupement

(30) Priorität: 15.11.1990 DE 4036341
(43) Veröffentlichungstag der Anmeldung: 20.05.1992
(73) Patentinhaber: KHS Maschinen- und Anlagenbau Aktiengesellschaft, D-47057 Duisburg (DE)
(72) Erfinder: Münch, Karl, D-6148 Heppenheim (DE)

(56) Entgegenhaltungen:
- DE-A- 2 711 702
- FR-A- 2 491 039
- FR-A- 2 563 184

## Beschreibung

Die Erfindung bezieht sich auf eine Gruppiereinrichtung zur Bildung von jeweils eine vorgegebene Gruppenlänge aufweisenden Behältergruppen durch Abtrennen einer der Gruppenlänge entsprechenden Anzahl von Behältern aus einem über wenigstens einen Transporteur zugeführten Behälterstrom gemäß Oberbegriff Patentanspruch 1.

Eine Gruppiereinrichtung dieser Art ist bekannt (DE-A-37 02 954). Bei der bekannten Gruppiereinrichtung, bei der die Bewegung der Gruppierelemente in der gewünschten Weise einerseits durch das umlaufende Antriebselement und andererseits durch den mit dem Verstellelement zusammenwirkenden Lenkarm erreicht wird, ist auch bereits eine Einstellung bzw. Anpassung des Zwickelmaßes (Gruppenlänge) an unterschiedliche Behältergrößen einfach und problemlos möglich. Die Gruppierelemente sind in gleichmäßigen Abständen schwenkbar an dem Antriebselement gehalten und werden durch den mit dem Verstellelement zusammenwirkenden Lenkarm so gesteuert, daß die Abteiler, die im bekannten Fall Gruppierfinger sind, insbesondere auch am Anfang sowie am Ende der Teillänge der Umlaufbahn, d. h. im Bereich des Einlaufs und im Bereich des Auslaufs der Gruppiereinrichtung, eine jeweils vorgegebene Winkellage bzw. Winkelstellung gegenüber der Förderrichtung des Transporteurs aufweisen. Diese Winkellage am Anfang und am Ende der Teillänge der Umlaufbahn bestimmt dann letztlich das Zwickelmaß. Durch Änderung der Lage des Verstellelementes relativ zum Antriebselement können dann diese Winkellage und damit das Zwickelmaß bzw. die Gruppenlänge verändert bzw. eingestellt werden, obwohl die Gruppierelemente in vorgegebenen, gleichen Abständen schwenkbar am Antriebselement vorgesehen sind. Bei der bekannten Gruppiereinrichtung ist das Verstellelement ebenfalls ein umlaufend angetriebenes band- oder kettenartiges Element , wodurch ein nicht unerheblicher konstruktiver Aufwand erforderlich ist.

Bekannt ist weiterhin eine Gruppiereinrichtung (DE-A-27 11 702), bei der mehrere, jeweils Abteiler bzw. Gruppierfinger aufweisende und als Wagen ausgebildete Gruppierelemente mit Rollen in einer gemeinsamen, geschlossenen Führung umlaufend vorgesehen sind, und zwar derart, daß sich jeder Wagen bzw. jedes Gruppierelement bei einem vollen Lauf auf einer Bewegungsbahn zunächst aus einer weit unterhalb der Transportebene eines Transporteurs vorgesehenen Ausgangsposition bzw. Speicherstelle auf einem kreisbogenförmigen Abschnitt der Bewegungsbahn nach oben an den Einlauf der Gruppiereinrichtung, dann auf einem im wesentlichen horizontalen Abschnitt der Bewegungsbahn in Förderrichtung des Transporteurs bis an den Auslauf der Gruppiereinrichtung, dann auf einen weiteren kreisbogenförmigen Abschnitt der Bewegungsbahn nach unten und schließlich an die Ausgangsposition bzw. Speicherstelle zurück auf einen im wesentlichen horizontalen Abschnitt der Bewegungsbahn entgegen der Förderrichtung des Transporteurs bewegt. Die Führung für die Gruppierelemente ist von zwei, parallel zueinander und im Abstand voneinander fest an einem Maschinengestell vorgesehenen und jeweils in sich geschlossenen Kurven gebildet. In jeder Kurve ist jedes Gruppierelement mit zwei Rollen geführt. Zusätzlich zu der Führung ist bei dieser bekannten Gruppiereinrichtung noch ein Zug- bzw. Antriebselement zum Bewegen der Gruppierelemente vorgesehen, und zwar in Form einer geschlossenen, endlos umlaufend angetriebenen Kette. Die Gruppierelemente sowie auch diese Kette sind so ausgebildet, daß die an der Ausgangsposition bzw. Speicherstelle bereitstehenden Gruppierelemente durch einen dortigen Kuppler nacheinander formschlüssig mit der Kette verbunden werden können, so daß die nach einem solchen Verbinden jeweils von der Kette mitgeführten Gruppierelemente bei ihrer Bewegung zwischen dem Einlauf und dem Auslauf der Gruppiereinrichtung den der geforderten Gruppenlänge entsprechenden Abstand voneinander aufweisen. Durch einen Entkuppler werden die Gruppierelemente im Bereich des Auslaufs wieder außer Eingriff mit dem Antriebselement gebracht und gelangen an die Ausgangsposition zurück, in der jeweils eine gewisse Anzahl von Gruppierelementen, die nicht in Eingriff mit dem Antriebselement sind, bereitstehen.

Bei dieser bekannten Gruppiereinrichtung, bei der die Gruppierelemente nicht ständig mit dem Antriebselement verbunden sind und bei der die Gruppierelemente auch keinen gleichmäßigen Abstand insofern voneinander aufweisen, als die Gruppierelemente an der Ausgangsposition unmittelbar aufeinander folgend und nicht in einem der Gruppenlänge entsprechenden Abstand bereitstehen, ist zwar ebenfalls eine Einstellung dieser Gruppenlänge möglich, allerdings unter Inkaufnahme eines ganz erheblichen, konstruktiven Aufwandes. Eine Änderung der Gruppenlänge durch Änderung der Winkelstellung, die die Abteiler bzw. Gruppierfinger jeweils am Einlauf bzw. am Auslauf aufweisen, ist bei dieser bekannten Gruppiereinrichtung nicht vorgesehen. Vielmehr besitzen die Abteiler bzw. Gruppierfinger dort unabhängig von der jeweiligen Gruppenlänge am Einlauf sowie am Auslauf jeweils die gleiche Winkelstellung in bezug auf die Förderrichtung des Transporteurs.

Aufgabe der Erfindung ist es, eine Gruppiereinrichtung der eingangs erwähnten Art im Sinne einer Vereinfachung der Konstruktion weiterzubilden.

Zur Lösung dieser Aufgabe ist eine Gruppiereinrichtung entsprechend dem kennzeichnenden Teil des Patentanspruches 1 ausgebildet.

Bei der erfindungsgemäßen Gruppiereinrichtung ist zum Bewegen der Gruppierelemente lediglich das band- oder kettenartige Antriebselement vorgesehen, welches bei einer bevorzugten Ausführungsform von wenigstens zwei mit ihrer Schlaufe in parallelen Ebenen liegenden, in sich geschlossenen Ketten gebildet ist, während das Verstellelement eine einfache, in sich geschlossene Steuerkurve aufweist, in die der jeweilige Lenkarm mit wenigstens einem Gleitstück oder einer Kurvenrolle eingreift. Ein konstruktiv relativ aufwendiges Verstellelement bestehend aus einer Kette, aus wenigstens zwei Kettenrädern, aus einem Antrieb für eines der beiden Kettenräder usw. ist somit bei der erfindungsgemäßen Gruppiereinrichtung nicht erforderlich.

Weiterbildungen der Erfindung sind Gegenstand der Unteransprüche.

Die Erfindung wird im folgenden anhand der Figuren an einem Ausführungsbeispiel näher erläutert. Es zeigen:
- Fig. 1: in vereinfachter, schematischer Seitenansicht einen aus einer Gruppiervorrichtung gemäß der Erfindung sowie aus einem hieran anschließenden Einpacker bestehenden Teil einer Flaschenbehandlungsanlage;
- Fig. 2: eine Draufsicht auf den in der Fig. 1 dargestellten Teil der Flaschenbehandlungsmaschine;
- Fig. 3: in vergrößerter Darstellung eine Seitenansicht der Gruppiereinrichtung in einer ersten, einer minimalen Gruppenlänge entsprechenden Einstellung bzw. Lage des Verstellelementes;
- Fig. 4: eine ähnliche Darstellung wie Fig. 3, jedoch bei einer einer maximalen Gruppenlänge entsprechenden Einstellung bzw. Lage des Verstellelementes;
- Fig. 5: einen Schnitt entsprechend der Linie I-I der Fig. 3;
- Fig. 6: in Teildarstellung und im Horizontalschnitt eine Seitenwand der Gruppiervorrichtung, zusammen mit dem an dieser Seitenwand einstellbar vorgesehenen Verstellelement;
- Fig. 7: eine Betätigungseinrichtung zum Verstellen des Verstellelementes.

In den Figuren ist 1 ein Einpacker üblicher Ausbildung, der an einem um eine vertikale Achse drehbaren Rotor 2 mehrere, jeweils in vertikaler Richtung auf- und abbewegbare sowie um die vertikale Achse drehbare Packköpfe 3 aufweist, die jeweils eine auf einem Transporteur 4 angeförderte Flaschengruppe 5, welche bei der dargestellten Ausführungsform aus insgesamt zwanzig Flaschen 6 besteht und in welcher die Flaschen 6 in vier Reihen zu je fünf Flaschen 6 angeordnet sind, vom Transporteur 4 abnehmen und in nicht dargestellte Transportverpackungen (Flaschenkästen) einsetzen.

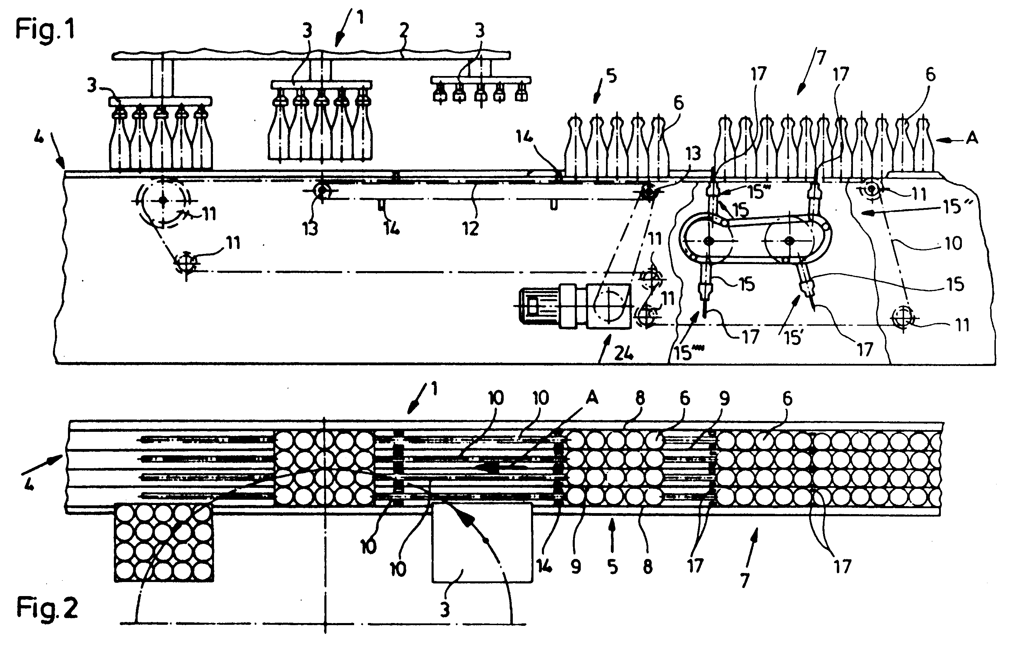

Die Flaschen 6 werden bei der für die Fig. 1 und 2 gewählten Darstellung über den Transporteur 4 oder eine weitere, vorgeschaltete Fördereinrichtung aufrechtstehend und in einem dichtgepackten vierreihigen bzw. -spurigen Flaschenstrom von rechts zugeführt (Pfeil A). Im Bereich einer dem Einpacker 1 vorgeschalteten Gruppiereinrichtung 7 wird der Flaschenstrom in die Flaschengruppen 5 aufgeteilt, die dann jeweils als solche getrennt nacheinander dem Einpacker 1 zugeführt werden. Zum Fördern der Flaschen 6 bzw. der Flaschengruppen 5 im Bereich der Gruppiereinrichtung 7 sowie von dieser an den Einpacker 1 sind vier parallel zueinander angeordnete und jeweils durch seitliche, beispielsweise von Führungsblechen gebildete Führungen 8 bzw. 9 nach außen begrenzte bzw. voneinander getrennte Transportbahnen vorgesehen, von denen jede ein endlos umlaufendes Transportelement, in Form einer Scharnierbandkette 10 aufweist. Jede Scharnierbandkette 10 ist über mehrere Umlenkrollen oder -räder 11, von denen eines durch einen Antrieb angetrieben ist, derart geführt, daß jede Scharnierbandkette 10 mit ihrer jeweiligen oberen Länge in horizontaler Richtung und in Förderrichtung A verläuft und in einer horizontalen Transportebene TE des Transporteurs 4 eine Standfläche für den Boden der aufrechtstehenden Flaschen 6 bildet.

Um insbesondere die Bewegung der Flaschengruppen 5 von der Gruppiereinrichtung 7 an den Einpacker 1 an dessen Arbeitszyklus anzupassen, sind im Bereich zwischen der Gruppiereinrichtung 7 und dem Einpacker 1 zusätzlich zu den von den Scharnierbandketten 10 gebildeten Fördereinrichtungen mehrere endlos umlaufende, parallel zueinander angeordnete Hilfsketten 12 vorgesehen, von denen jede über zwei Kettenräder 13 derart geführt ist, daß sie mit ihrer oberen Länge parallel zu den oberen Längen der Scharnierbandketten 10 liegt. Die Anordnung ist dabei so getroffen, daß an beiden Längsseiten der oberen Länge jeder Scharnierbandkette 10 die etwas tiefer liegende obere Länge jeweils einer Hilfskette 12 vorgesehen ist. Jede Hilfskette 12 ist in vorgegebenen Abständen mit Anlagenocken 14 versehen, die an der jeweils oberen Länge der Hilfskette 12 von unten her durch einen zwischen der zugehörigen Scharnierbandkette 10 und der seitlichen Führung 8 bzw. 9 gebildeten Spalt über die von der oberen Länge der betreffenden Scharnierbandkette 10 gebildete Transportebene TE vorsteht. Die Anlagenocken 14 bilden somit Anlageflächen für die in Förderrichtung A vorderen Flaschen 6 der jeweiligen Flaschengruppe 5. Da die Hilfsketten 12 über das jeweilige, in der Fig. 1 rechte Kettenrad 13 derart angetrieben werden, daß deren obere Längen sich in Förderrichtung A bewegen, die Geschwindigkeit der Hilfsketten 12 jedoch kleiner ist als die Geschwindgkeit der Scharnierbandketten 10, laufen die in Förderrichtung vorderen Flaschen 6 jeder Flaschengruppe 5 (nach dem Abtrennen dieser Flaschengruppe in der Gruppiereinrichtung 7) gegen die Anlagenocken 14 an. Die betreffende Flaschengruppe 5 wird dann unter Aufrechterhaltung ihrer Formation mit einer verminderten Geschwindigkeit, die der Umlaufgeschwindigkeit der Hilfsketten 12 entspricht, an den Einpacker 1 transportiert. Der Antrieb der Hilfsketten 12 ist dabei derart an den Arbeitstakt der Gruppiereinrichtung 7 angepaßt, daß immer dann, wenn eine Flaschengruppe 5 die Gruppiereinrichtung 7 verläßt, sich in Förderrichtung vor dieser Flaschengruppe Anlagenocken 14 befinden, gegen die dann diese Flaschengruppe 5 vor dem Erreichen des Einpackers 1, aber erst nach einer für das Abtrennen von nachfolgenden Flaschen 6 bzw. Flaschengruppen 5 ausreichenden Förderweglänge zur Anlage kommt.

Die Gruppiereinrichtung 7 besitzt bei der dargestellten Ausführungsform vier Gruppierelemente 15. Jedes Gruppierelement 15 ist von einem Balken 16 gebildet, der mit seiner Längserstreckung in horizontaler Richtung und senkrecht zur Förderrichtung A liegt und an einer Längsseite eine Vielzahl von über diese Längsseite vorstehenden Gruppierfingern 17 trägt. Mit Hilfe einer nachfolgend noch näher beschriebenen Getriebeeinrichtung werden die Gruppierelemente auf einer in sich geschlossenen Bahn derart bewegt, daß jedes Gruppierelement 15 am Einlauf der Gruppiereinrichtung 7 aus einer gegenüber der Transportebene TE abgesenkten Ausgangsstellung, die in den Figuren mit der Position 15' bezeichnet ist, zunächst in eine mit 15'' bezeichnete angehobene Position bewegt wird. Die Gruppierfinger 17 befinden sich in der Position 15' weit unterhalb der Transportebene TE und stehen bei Erreichen der Position 15'' mit ihren freien Enden über die Transportebene TE vor und werden somit als mit den Flaschen 6 zusammenwirkende Anschlagflächen wirksam. Die Anzahl der Gruppierfinger 17 und deren paarweise Anordnung am Balken 16 sind bei jedem Gruppierelement 15 so gewählt, daß nach Erreichen der Position 15'' an jeder Längsseite jeder Scharnierbandkette 10 ein Gruppierfinger 17 eine Gruppierfingerpaares über die Transportebene TE nach oben vorsteht, wie sich dies insbes. aus der Fig. 5 ergibt. Es versteht sich, daß der Abstand der Gruppierfinger 17 eines Gruppierfingerpaares selbstverständlich kleiner ist als der Außendurchmesser der Flaschen 6.

Ab der Position 15'' wird jedes Gruppierelement 15 bei weiterhin über die Transportebene TE nach oben vorstehenden Gruppierfinger 17 in horizontaler Richtung und dabei in Förderrichtung A bewegt, bis das betreffende Gruppierelement 15 am Auslauf der Gruppiereinrichtung 7 die Position 15''' erreicht hat. Daran anschließend wird jedes Gruppierelement 15 abgesenkt, womit die Gruppierfinger 17 aus der Bewegungsbahn der Flaschen 6 nach unten herausbewegt werden. Sobald das betreffende Gruppierelement 15 die Position 15'''' erreicht hat, in der sich die Gruppierfinger weit unterhalb der Transportebene TE befinden, bewegt sich dieses Gruppierelement 15 im wesentlichen in horizontaler Richtung und entgegen der Förderrichtung A an die Position 15' zurück.

Die Anzahl der Gruppierelemente 15 ist bezogen auf die gesamte Länge der vorbeschriebenen Bewegungsbahn so gewählt, daß sich zu jedem Zeitpunkt wenigstens ein Gruppierelement 15 zwischen den Positionen 15'' und 15''' befindet und außerdem auch immer dann, wenn ein Gruppierelement 15 die Position 15''' erreicht hat, ein nachfolgendes Gruppierelement 15 die Position 15'' eingenommen hat. Weiterhin ist die Geschwindigkeit, mit der die Gruppierelemente 15 in der vorbeschriebenen Weise umlaufen bzw. sich von der Position 15'' an die Position 15''', kleiner als die Fördergeschwindigkeit der Scharnierbandketten 10. Hierdurch wird erreicht, daß durch jedes Gruppierelement 15 bzw. durch dessen Gruppierfinger 17 nach dem Verlassen der Position 15'' die nachfolgenden, unmittelbar aneinander anstehenden Flaschen 6 der Flaschenreihen gegen die größere Fördergeschwindigkeit der Scharnierbandketten 10 zurückgehalten werden und entsprechend der geringeren Geschwindigkeit des betreffenden Gruppierelementes 15 verlangsamt in Richtung vom Einlauf der Gruppiereinrichtung 7 auf dessen Auslauf bewegt werden.

Sobald ein die Flaschen 6 zurückhaltendes Gruppierelement 15 die Position 15''' bzw. den Auslauf der Gruppiereinrichtung 7 erreicht und sich somit zwischen dem Einlauf und dem Auslauf der Gruppiereinrichtung 7 in jeder Reihe des Flaschenstromes eine der abzutrennenden Flaschengruppe 5 entsprechende Anzahl von Flaschen 6 befindet, auf jeden Fall bevor dieses Gruppierelement 15 die Position 15''' verläßt und mit seinen Gruppierfingern 17 die zurückgehaltenen Flaschen 6 freigibt, haben sich schon die Gruppierfinger 17 eines nachfolgenden Gruppierelementes 15 an der Position 15'', d.h. am Einlauf der Gruppiereinrichtung 7 zwischen die letzten Flaschen 6 der abzutrennenden Flaschengruppe 5 und die nachfolgenden Flaschen 6 hineinbewegt, und zwar jeweils beidseitig von dem Bereich, an dem diese Flaschen 6 dort noch gegeneinander anliegen. Anschließend werden durch das Abtauchen des vorausgehenden, die Position 15''' verlassenden Gruppierelementes 15 die die abzutrennende Flaschengruppe 5 bildenden Flaschen 6 freigegeben und als Flaschengrupe 5 durch die Scharnierbandketten 10 mit größerer Geschwindigkeit weggefördert. Die dieser Flaschengruppe 5 nachfolgenden Flaschen 6 liegen dann gegen die Gruppierfinger 17 des nachfolgenden, sich nun von der Position 15'' an die Position 15''' bewegenden Gruppierelementes 15 an, werden mit diesem verlangsamt an den Auslauf bewegt und dort freigegeben, nachdem ein weiteres nachfolgendes Gruppierelement 15 die Position 15'' erreicht hat.

Der am Einlauf der Gruppiereinrichtung 7 anstehende dichtgepackte Flaschenstrom wird somit in einzelne Gruppen 5 aufgeteilt. Für eine einwandfreie Funktion der Gruppiereinrichtung 7 ist es notwendig, daß der wirksame Abstand (Zwickelmaß), den die Gruppierfinger 17 zweier in den Positionen 15'' bzw. 15''' befindlicher Gruppierelemente 15 in Förderrichtung A voneinander aufweisen, etwas kleiner ist als die Summe der Durchmesser der in jeder Reihe der Gruppe 5 angeordneten Flaschen 6, d.h. bei der dargestellten Ausführungsform etwas kleiner ist als der fünffache Durchmesser der Flaschen 6.

Insbesondere dann, wenn mit ein und derselben Gruppiereinrichtung 7 Flaschen 6 mit unterschiedlichem Durchmesser verarbeitet werden sollen, ist eine Einstellung bzw. Anpassung des Zwickelmaßes bzw. der Gruppenlänge GL notwendig. Diese Einstellung ist bei der Gruppiereinrichtung 7 mit Hilfe der dortigen, den Umlauf der Gruppierelemente 15 bewirkenden Getriebeeinrichtung besonders einfach möglich.

Diese Getriebeeinrichtung besteht aus zwei, jeweils von einer in sich geschlossenen und endlos umlaufenden Kette 18 gebildeten Antriebselementen für die Gruppierelemente 15. Jede Kette 18 ist dabei an einer Längsseite der Gruppiereinrichtung 7 bzw. des von dieser gebildeten Teils des Transporteurs 4 im Inneren eines Gehäuses vorgesehen, von welchem insbes. in den Figuren 5 - 7 nur eine sich in vertikaler Richtung erstreckende seitliche Wand 19 wiedergegeben ist. Die Ketten 18 sind jeweils über zwei Kettenränder 20 und 21 derart geführt, daß sie eine obere, horizontale und sich in Förderrichtung bewegende Länge 18' und eine untere, ebenfalls horizontale, sich aber entgegen der Förderrichtung A bewegende Länge 18'' aufweist. Beide Längen 18' und 18'' liegen dabei unterhalb der von den Scharnierbandketten 10 gebildeten Transportebene, und zwar zusammen mit der jeweils über die Kettenräder 20 und 21 geführten Längen in einer vertikalen Ebene. Die Kettenräder 20 und 21 sind jeweils paarweise um eine gemeinsame horizontale, senkrecht zur Förderrichtung A verlaufende Achse drehbar gelagert, und zwar die beiden Kettenräder 20 mittels einer Welle 22 und die beiden Kettenräder 21 mittels einer Welle 23, von denen die Welle 22 von einem einen Getriebemotor aufweisenden Antrieb 24 angetrieben ist, der bei der dargestellten Ausführungsform auch zum Antrieb der Hilfskette 12 dient.

Die beiden Ketten 18 besitzen jeweils die gleiche Länge. Dementsprechend sind auch die beiden Kettenräder 20 und die beiden Kettenräder 21 jeweils gleich ausgebildet. Bei der dargestellten Ausführungsform besitzen auch die Kettenräder 20 und 21 jeweils den gleichen Durchmesser.

Wie aus der Fig. 5 ersichtlich ist, sind die beiden Ketten 18 zumindest dort, wo ein Gruppierelement 15 vorgesehen ist, durch einen zusätzlichen Balken 25 miteinander verbunden, der mit seiner Längserstreckung parallel zu der Achse der Welle 22 bzw. 23 liegt. Jeder Balken 25 steht mit seinen Enden über die der jeweiligen Längsseite der Gruppiereinrichtung 7 zugewendete, außenliegende Seiten der benachbarten Kette 18 vor. An jedem Ende des Balkens 25 ist mittels eines Gelenkbolzens 26 ein starrer Hilfsarm 27 des jeweiligen Gruppierelementes 15 um eine parallel zu den Achsen der Wellen 22 und 23 verlaufende Achse schwenkbar vorgesehen, wobei die Gelenkbolzen 26 an den beiden Enden eines Balkens 25 achsgleich miteinander angeordnet sind. Die Balken 25 und damit auch die Gelenkbolzen 26 sind jeweils in gleichen Abständen voneinander an den Ketten 18 verteilt vorgesehen bzw. befestigt, so daß die Gruppierelemente 15 in gleichen Abständen voneinander schwenkbar an den Ketten 18 gehalten sind. Jeder Hilfsarm 27 ist mit seinem dem Gelenkbolzen 26 entfernt liegenden Ende, welches beim Umlauf der Ketten 18 bzw. der Gruppierelemente 15 in Umlaufrichtung B zwischen den Positionen 15'' und 15''' nach oben weist und zwischen den Positionen 15'''' und 15' nach unten weist, starr mit jeweils einem Ende des Balkens 16 verbunden. Die Hilfsarm 27 liegen mit ihrer Längserstreckung jeweils in einer vertikalen Ebene.

An der einen Längsseite der Gruppiereinrichtung bzw. im Bereich einer Kette 18 sind die dortigen Hilfsarm 27 jeweils mit einem Steuer- bzw. Lenkarm 28 versehen, der sich mit seiner Längserstreckung von dem Gelenkbolzen 26 in etwa radial wegerstreckt, mit der Längserstreckung des zugehörigen Hilfsarms 27 in einer gemeinsamen vertikalen Ebene liegt, und zwar derart, daß die Längserstreckung des Hilfsarms 27 und die Längserstreckung des Steuerarmes 28 einen Winkel, bevorzugt einen Winkel größer als 90^{o} miteinander einschließen. Dieser Winkel beträgt bei der dargestellten Ausführungsform etwa 120^{o}. Der Lenkarm 28 ist an dem betreffenden Hilfsarm 27 weiterhin so vorgesehen, daß das dem Gelenkbolzen 26 entfernt liegende Ende des jeweiligen Lenkarmes 28 beim Umlauf der Gruppierelemente 15 bzw. der Ketten 18 nachgeführt ist. An diesem nachgeführten Ende besitzen die Lenkarme 28 jeweils eine um eine Achse parallel zu den Achsen der Wellen 22 und 23 frei drehbar gelagerte Kurvenrolle 29, die seitlich in eine in sich geschlossene Steuerkurve 30 eingreift. Diese ist in einer Ebene parallel zu derjenigen Ebene angeordnet, in der die von der benachbarten Kette 18 gebildete Schlaufe liegt. Bei der dargestellten Ausführungsform ist die Steuerkurve 30 eine in sich geschlossene Nut, die an einem im wesentlichen plattenförmigen Verstellelement 31 gebildet ist.

Das Verstellelement 31 ist an der Seitenwand 19 der entsprechenden Längsseite der Gruppiereinrichtung 7 innen vorgesehen, und zwar von dieser Längsseite her gesehen vor der Umlaufbahn der Hilfsarm 27. Für den Eingriff der Kurvenrollen 29 in die Steuerkurve 30 ist diese an ihrer der Bewegungsbahn der Hilfsarm 27 zugewandten Seite offen.

Zur Einstellung des Zwickelmaßes bzw. der Gruppenlänge GL sind das Verstellelement 31 und damit auch die Steuerkurve 30 durch Schwenken um eine horizontale, senkrecht zur Transportrichtung A bzw. parallel zu den Achsen der Wellen 22 und 23 verlaufende Achse einstellbar. Hierfür ist das Verstellelement 31 mittels eines Gelenkbolzens 32 an dem Gehäuse bzw. an der Seitenwand 19 befestigt. Zum Festlegen der jeweiligen Einstellung des Verstellelementes 31 sind zwei Klemmstücke 33 mit zugehörigen Klemmschrauben 34 vorgesehen. Für die Einstellung des Verstellelementes 31 ist weiterhin an der Außenseite des Gehäuses bzw. an der Seitenwand 19 der Gruppiereinrichtung 7 eine eine Gewindespindel 35 aufweisende Verstelleinrichtung 36 vorgesehen. Auf der Gewindespindel 35 sitzt ein in Längsrichtung dieser Spindel geführter Klotz 37, der über einen Zapfen 38 bei dem Verdrehen der Gewindespindel 35 das Verstellelement 31 um die Achse des Gelenkbolzens 32 schwenkt.

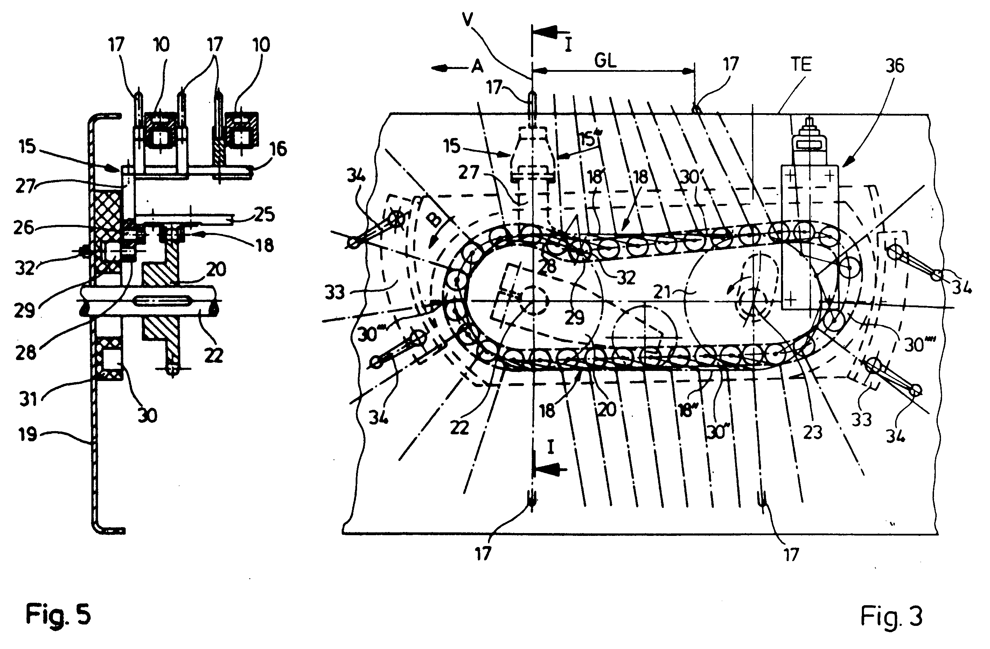

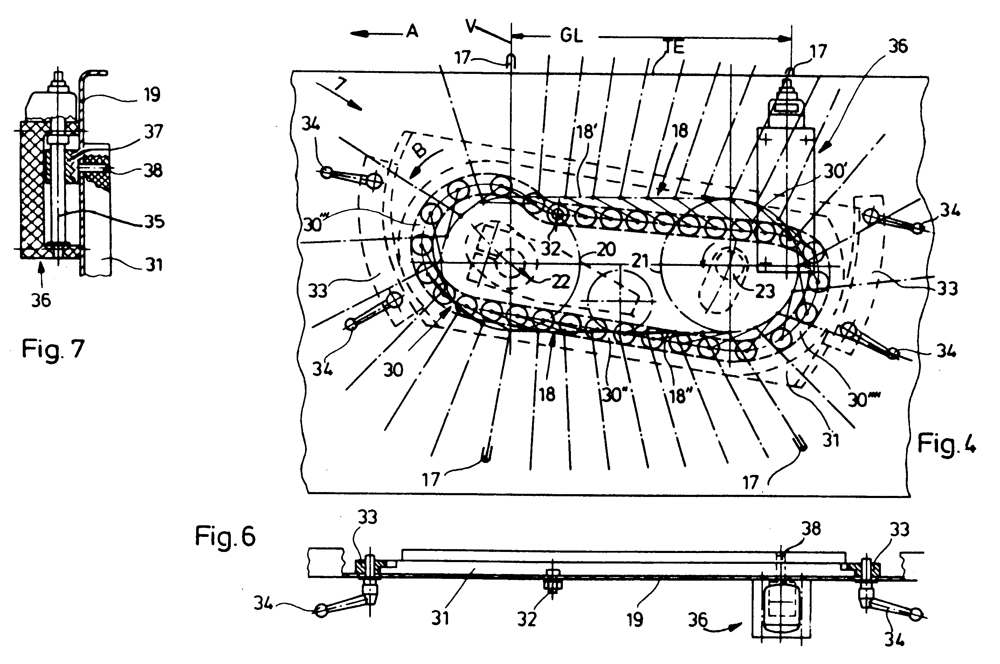

Wie die Figuren 3 und 4 zeigen, besitzt die Steuerkurve 30 einen Verlauf, der sich aus mehreren Abschnitten zusammensetzt, und zwar aus den beiden im wesentlichen geradlinigen Abschnitten 30' und 30'', von denen der Abschnitt 30' oberhalb des Abschnittes 30'' im Bereich der Kettenlänge 18' und der Abschnitt 30'' unterhalb des Abschnittes 30' im Bereich der Kettenlänge 18'' vorgesehen sind, sowie aus zwei die Abschnitte 30' und 30'' miteinander verbindenden kurvenförmigen Abschnitten 30''' und 30'''', von denen der im wesentlichen kreisbogenförmig ausgebildete Abschnitt 30''' im Bereich der Positionen 15''' und 15'''' die Abschnitte 30' und 30'' und der Abschnitt 30'''' im Bereich der Positionen 15' und 15'' die Abschnitte 30'' und 30' miteinander verbindet. Der Abschnitt 30'''' besitzt ausgehend vom Abschnitt 30'' zunächst einen größeren Krümmungsradius und dann am Übergangsbereich zum Abschnitt 30' einen wesentlich kleineren Krümmungsradius.

Weiterhin ist der Verlauf der Steuerkurve 30 so gewählt, daß bei der für die Figuren 3 und 4 gewählten Darstellung sowohl der Abschnitt 30''' als auch der Abschnitt 30'''' der Steuerkurve 30 über die von der benachbarten Kette 18 gebildete Schlaufe in Förderrichtung A bzw. entgegen der Förderrichtung A wegsteht. Die Mittellinie der Steuerkurve 30, die derjenigen Linie entspricht, auf der die Achse der Kurvenrolle 29 beim Umlauf des jeweiligen Gruppierelementes 15 bewegt wird, schneidet die Projektion der Kette 18 auf die Ebene der Steuerkurve 30 mehrmals, und zwar bei beiden in den Figuren 3 und 4 dargestellten Einstellungen des Verstellelementes 31 zweimal im Bereich des Abschnittes 30''', wo auch zumindest in einem Teilbereich die Mittellinie der Steuerkurve 30 die Projektion der Kette 18 außen umschließt. Die Projektion der Kette auf die Ebene der Steuerkurve 30 schneidet weiterhin die Mittellinie der Steuerkurve 30 zwei weitere Male, und zwar bei der Einstellung des Verstellelementes 31 gemäß Fig. 3 bezogen auf die Umlaufrichtung B am Beginn des Abschnittes 30'''' und am Beginn des Abschnittes 30' sowie bei der in der Fig. 4 dargestellten Einstellung des Verstellelementes 31 bezogen auf die Umlaufrichtung B am Ende des Abschnittes 30'' und am Ende des Abschnittes 30''''. Bei beiden Einstellungen verläuft weiterhin die Mittellinie der Steuerkurve 30 im Bereich der Abschnitte 30' und 30'' zumindest auf einer Teillänge innerhalb der Projektion der Kette 18.

Der Gelenkbolzen 32, mit dem das Verstellelement 31 einstellbar, d. h. schwenkbar an der Seitenwand 19 vorgesehen ist, schneidet mit seiner Achse die Mittellinie der Steuerkurve 30, und zwar am Übergangsbereich zwischen den Abschnitten 30' und 30''', wobei in beiden Einstellungen des Verstellelementes 31 (Fig. 3 bzw. Fig. 4) die Steuerkurve 30 bzw. deren Mittellinie ausgehend von diesem Übergangsbereich schräg nach oben verläuft, und zwar in einem Winkel mit einer gedachten vertikalen Achse V, der (Winkel) gleich oder in etwa gleich demjenigen Winkel ist, den die Längserstreckungen der Hilfsarm 27 und Lenkarme 28 miteinander einschließen.

Durch die in die Steuerkurve 30 eingreifende Kurvenrolle 29 wird für jedes Gruppierelement 15 beim Umlauf der Ketten 18 eine Schwenk- bzw. Steuerbewegung erreicht, bei der an der Position 15''', d.h. am Auslauf der Gruppiereinrichtung 7 die Gruppierelemente 15 unabhängig von der Einstellung des Verstellelementes 31 im wesentlichen die gleiche Orientierung aufweisen, während die Orientierung der Gruppierelemente 15 am Einlauf der Gruppiereinrichtung 7 abhängig von der Einstellung des Verstellelementes 31 ist. So werden bei der Einstellung nach Fig. 3, in der die Mittellinie der Steuerkurve 30 am Ende des Abschnittes 30'' und am Beginn des Abschnittes 30' in etwa niveaugleich mit der Projektion der oberen Länge 18' der Kette 18 liegt, die Gruppierfinger 17 am Einlauf der Gruppiereinrichtung 7 erst relativ spät über die Transportebene TE nach oben bewegt, so daß sich eine kleine Gruppenlänge GL ergibt.

Bei der Einstellung nach Fig. 4, bei der die Mittellinie der Steuerkurve 30 am Ende des Abschnittes 30'''' sowie über die gesamte Länge des Abschnittes 30' unterhalb der Projektion der oberen Länge 18' der Kette 18 verläuft, werden am Einlauf der Gruppiereinrichtung 7 die Gruppierfinger 17 frühzeitig über die Oberseite der Transportebene TE nach oben bewegt, so daß sich eine große Gruppenlänge GL ergibt.

Die Erfindung wurde voranstehend an einem Ausführungsbeispiel beschrieben. Es versteht sich, daß Änderungen sowie Abwandlungen möglich sind, ohne daß dadurch der der Erfindung zugrundeliegende Erfindungsgedanke verlassen wird.

## Patentansprüche

1. Gruppiereinrichtung zur Bildung von jeweils eine vorgegebene Gruppenlänge (GL) aufweisenden Behältergruppen (5) durch Abtrennen einer dieser Gruppenlänge entsprechenden Anzahl von Behältern (6) aus einem über einen Transporteur (4) zugeführten Behälterstrom, mit mehreren Anschlag- und Stauflächen für die Behälter an Abteilern oder Gruppierfingern (17) bildenden Gruppierelementen (15), die an wenigstens zwei endlos umlaufenden, jeweils eine Schlaufe bildenden band- oder kettenartigen Antriebselementen (18) vorgesehen sind und deren Anschlag- bzw Stauflächen in einer Umlaufrichtung (B) auf einer in sich geschlossenen Umlaufbahn bewegt werden und auf einer in Förderrichtung (A) des Transporteurs (4) verlaufenden Teillänge der Umlaufbahn in die Bewegungsbahn der Behälter (6) auf dem Transporteur (4) hineinreichen und sich im restlichen Teil der Umlaufbahn außerhalb dieser Bewegungsbahn befinden, wobei die Gruppierelemente (15) um eine senkrecht zur Bewegungsrichtung (B) des Antriebselementes (18) verlaufende Schwenkachse (26) in gleichen Abständen voneinander schwenkbar an diesem Antriebselement (18) befestigt sind, wobei die Anschlag- bzw. Stauflächen jeweils in radialem Abstand von dieser Schwenkachse (26) an den Gruppierelementen (15) vorgesehen sind, von denen jedes starr mit einem sich radial zur Schwenkachse (26) erstreckenden Lenkarm (28) verbunden ist, der an einem Verstellelement (31) angreift, wobei der die Gruppenlänge (GL) bestimmende Abstand (Zwickelmaß) der auf der Teillänge der Umlaufbahn aufeinander folgenden Anschlag- bzw. Stauflächen einstellbar ist, und zwar durch Änderung der Winkellage, die die Abteiler bzw. Gruppierfinger (17) jeweils am Beginn und am Ende der Teillänge der Umlaufbahn mit der Förderrichtung (A) einschließen, und wobei für diese Einstellung der Gruppenlänge (GL) das Verstellelement (31) in seiner Lage relativ zum Antriebselement (18) verstellbar ist, dadurch gekennzeichnet, daß das Verstellelement (31) wenigstens eine in sich geschlossene Steuerkurve (30) aufweist, die in einer Ebene parallel zu der Ebene der Schlaufe des Antriebselementes (18) angeordnet ist und in die jeder Lenkarm (28) mit wenigstens einem Gleitstück oder einer Kurvenrolle (29) eingreift, daß das die Steuerkurve (30) aufweisende Verstellelement (31) schwenkbar an einem Maschinengestell der Gruppiereinrichtung (7) oder eines diese Gruppiereinrichtung bildenden Teils des Transporteurs (4) vorgesehen ist, und daß die Schwenkachse senkrecht zu derjenigen Ebene verläuft, in der die vom Antriebselement (18) gebildete Schlaufe angeordnet ist.

2. Gruppiereinrichtung nach Anspruch 1, dadurch gekennzeichnet, daß in bezug auf die Umlaufrichtung (B) der Gruppierelemente (15) bzw. des Antriebselementes (18) das Gleitstück oder die Kurvenrolle (29) der Schwenkachse (26) des zugehörigen Gruppierelementes (15) nachgeführt ist.

3. Gruppiereinrichtung nach Anspruch 1 oder 2, dadurch gekennzeichnet, daß das die Steuerkurve (30) aufweisende Verstellelement (31) um eine Schwenkachse (32) schwenkbar ist, die vorzugsweise die Mittellinie der Steuerkurve (30) schneidet.

4. Gruppiereinrichtung nach einem der Ansprüche 1 bis 3, dadurch gekennzeichnet, daß am Maschinengestell Einstellmittel, vorzugsweise eine eine Gewindespindel (35) aufweisende Verstelleinrichtung (36), und/oder Mittel zum Arretieren des Verstellelementes (31), vorzugsweise wenigstens eine Klemmeinrichtung (33, 34) vorgesehen sind.

5. Gruppiereinrichtung nach einem der Ansprüche 1 bis 4, dadurch gekennzeichnet, daß das die Steuerkurve (30) aufweisende Verstellelement (31) ein im wesentlichen plattenförmiges Element ist.

6. Gruppiereinrichtung nach einem der Ansprüche 1 bis 5, dadurch gekennzeichnet, daß die Mittellinie der Steuerkurve (30) von der Projektion des Antriebselementes (18) bzw. der Schlaufe dieses Antriebselementes (18) auf die Ebene der Steuerkurve (30) wenigtens zweimal, vorzugsweise viermal geschnitten wird, und zwar jeweils zweimal im Bereich eines Behältereinlaufs und/oder zweimal im Bereich eines Behälterauslaufs der Gruppiereinrichtung (7).

7. Gruppiereinrichtung nach einem der Ansprüche 1 bis 6, dadurch gekennzeichnet, daß die Mittellinie der Steuerkurve (30) die Projektion des Antriebselementes (18) bzw. der von diesem Antriebselement (18) gebildeten Schlaufe im Bereich des Behältereinlaufs und/oder im Bereich des Behälterauslaufs wenigstens auf einer Teillänge umschließt.

8. Gruppiereinrichtung nach einem der Ansprüche 1 bis 7, dadurch gekennzeichnet, daß die Mittellinie der Steuerkurve im Bereich des Behältereinlaufs sowie im Bereich des Behälterauslaufs jeweils einen gekrümmten Abschnitt (30'''', 30''') besitzt, von denen der Abschnitt (30''') am Behälterauslauf vorzugsweise im wesentlichen kreisbogenförmig ausgebildet ist.

9. Gruppiereinrichtung nach Anspruch 8, dadurch gekennzeichnet, daß die Schwenkachse (32) des Verstellelementes (31) in der Umlaufrichtung (B) etwa am Anfang des gekrümmten Abschnittes (30''') der Mittellinie der Steuerkurve (30) am Behälterauslauf vorgesehen ist.

10. Gruppiereinrichtung nach einem der Ansprüche 1 bis 9, dadurch gekennzeichnet, daß die von dem Antriebselement (18) gebildete Schlaufe sowie die geschlossene Steuerkurve (30) jeweils in vertikalen Ebenen angeordnet sind, die parallel zur Förderrichtung (A) des Transporteurs (4) liegen.

11. Gruppiereinrichtung nach Anspruch 10, dadurch gekennzeichnet, daß das Antriebselement (18) sowie die Steuerkurve (30) unter einer horizontalen Transportebene (TE) des Transporteurs (4) angeordnet sind, und daß sich die Anschlag- bzw. Stauflächen bzw. die Gruppierfinger (17) an einem Ende der Teillänge der Umlaufbahn von unten her in die Bewegungsbahn der Behälter (6) hineinbewegen und am anderen Ende der Teillänge der Umlaufbahn aus dieser Bewegungsbahn nach unten herausbewegen.

12. Gruppiereinrichtung nach einem der Ansprüche 1 bis 11, dadurch gekennzeichnet, daß das Antriebselement von wenigstens zwei in sich geschlossenen und über jeweils wenigstens zwei Rollen oder Räder (20, 21) geführte Ketten (18) gebildet sind.

13. Gruppiereinrichtung nach einem der Ansprüche 1 bis 12, dadurch gekennzeichnet, daß die wenigstens eine Steuerkurve (30) des Verstellelementes (31) in einer Ebene seitlich von der Umlaufbahn der Gruppierelemente (15) angeordnet ist.

14. Gruppiereinrichtung nach einem der Ansprüche 1 - 13, dadurch gekennzeichnet, daß das die wenigstens eine Steuerkurve (30) aufweisende Verstellelement (31) an einer Seitenwand (19) der Gruppiereinrichtung (7) oder eines diese Gruppiereinrichtung (7) bildenden Teils des Transporteurs (4) verstellbar bzw. einstellbar vorgesehen ist.

## Claims

1. Grouping equipment for the formation of container groups (5), which each display a preset group length (GL), by separating a number of containers (6), which corresponds with this group length, out of a container stream advanced by way of a transporter (4), with several abutment and baffle surfaces for the containers at grouping elements (15), which form separators or grouping fingers (17) and are provided at at least two endlessly circulating, belt-like or chain-like drive elements (18) each forming a loop and the abutment and baffle surfaces of which are moved on a closed orbital path in one orbital direction (B), reach into the movement path of the containers (6) on the transporter (4) over a partial length - which extends in the conveying direction (A) of the transporter (4) - of the orbital path and are disposed outside this movement path in the remaining part of the orbital path, wherein the grouping elements (15) are fastened at the drive element (18) at equal spacings one from the other to be pivotable about a pivot axle (26) extending perpendicularly to the movement direction (B) of this drive element (18), wherein the abutment and baffle surfaces are provided - each time at a radial spacing from this pivot axle (26) - at the grouping elements (15), each of which is rigidly connected with a guide arm (28), which extends radially of the pivot axle (26) and engages at an adjusting element (31), wherein the spacing (spandrel measure), which determines the group length (GL), of the abutment and baffle surfaces following one another on the partial length of the orbital path is adjustable and namely by changing the angle between the conveying direction (A) and the separators or grouping fingers (17) each time at the beginning and end of the partial length of the orbital path and wherein the adjusting element (31) is adjustable in its position relative to the drive element (18) for this adjustment of the group length (GL), characterised thereby, that the adjusting element (31) displays at one endless control cam (30), which is arranged in a plane parallel to the plane of the loop of the drive element (18) and into which each guide arm (28) engages by at least one slide member or a cam roller (29), that the adjusting element (31) displaying the control cam (30) is provided to be pivotable at a machine frame of the grouping equipment (7) or a part of the transporter (4) forming this grouping equipment and that the pivot axis extends perpendicularly to that plane in which the loop formed by the drive element (18) is arranged.

2. Grouping equipment according to claim 1, characterised thereby, that the slide member or the cam roller (29) is made to follow the pivot axle (26) of the associated grouping element (15) with respect to the orbital direction (B) of the grouping elements (15) or of the drive element (18).

3. Grouping equipment according to claim 1 or 2, characterised thereby, that the adjusting element (31) displaying the control cam (30) is pivotable about a pivot axis (32), which preferably intersects the centre line of the control cam (30).

4. Grouping equipment according to one of the claims 1 to 3, characterised thereby, that adjusting means, preferably an adjusting equipment (36) displaying a threaded spindle (35), and/or means for the arresting of the adjusting element (31), preferably at least one clamping equipment (33, 34), are provided at the machine frame.

5. Grouping equipment according to one of the claims 1 to 4, characterised thereby, that the adjusting element (31) displaying the control cam (30) is a substantially plate-shaped element.

6. Grouping equipment according to one of the claims 1 to 5, characterised thereby, that the centre line of the control cam (30) is intersected at least twice, preferably four times, by the projection of the drive element (18) or the loop of this drive element (18) onto the plane of the control cam (30) and namely each time twice in the region of a container inlet and/or twice in the region of a container outlet of the grouping equipment (7).

7. Grouping equipment according to one of the claims 1 to 6, characterised thereby, that the centre line of the control cam (30) encloses the projection of the drive element (18) or the loop formed by this drive element (18) over at least a partial length in the region of the container inlet and/or in the region of the container outlet.

8. Grouping equipment according to one of the claims 1 to 7, characterised thereby, that the centre line of the control cam (30) in the region of the container inlet as well as in the region of the container outlet each time has a curved portion (30'''', 30'''), of which the portion (30''') at the container outlet is preferably constructed to be of substantially circularly arcuate shape.

9. Grouping equipment according to claim 8, characterised thereby, that the pivot axis (32) of the adjusting element (31) is provided at the container outlet in the orbital direction (B) at about the beginning of the curved portion (30''') of the centre line of the control cam (30).

10. Grouping equipment according to one of the claims 1 to 9, characterised thereby, that the loop formed by the drive element (18) as well as the closed control cam (30) are each arranged in vertical planes which lie parallelly to the conveying direction (A) of the transporter (4).

11. Grouping equipment according to claim 10, characterised thereby, that the drive element (18) as well as the control cam (30) are arranged below an horizontal transport plane (TE) of the transporter (4) and that the abutment and baffle surfaces or the grouping fingers (17) move into the movement path of the containers (6) from below at one end of the partial length of the orbital path and move out of this movement path downwardly at the other end of the partial length of the orbital path.

12. Grouping equipment according to one of the claims 1 to 11, characterised thereby, that the drive element (18) is formed by at least two endless chains (18) each guided respectively over at least two rollers or wheels (20, 21).

13. Grouping equipment according to one of the claims 1 to 12, characterised thereby, that the at least one control cam (30) of the adusting element (31) is arranged in a plane arranged laterally of the orbit path of the grouping elements (15).

14. Grouping equipment according to one of the claims 1 to 13, characterised thereby, that the adjusting element (31) displaying the at least one control cam (30) is provided to be resettable or adjustable at a side wall (19) of the grouping equipment (7) or a part of the transporter (4) forming this grouping equipment (7).

## Revendications

1. Dispositif de groupement, pour former des groupes (5) de récipients présentant à chaque fois une longueur de groupe (GL) prédéterminée, par séparation d'un nombre de récipients (6), correspondant à cette longueur de groupe, à partir d'un flux de récipients acheminé par un transporteur (4), le dispositif comportant plusieurs surfaces de butée et de retenue des récipients sur des éléments groupeurs (15) formant des doigts (17) séparateurs ou groupeurs, qui sont prévus sur au moins deux éléments (18) d'entraînement, du genre bande ou chaîne, tournant sans fin et formant à chaque fois une boucle et dont les surfaces de butée ou de retenue sont déplacées dans une direction de rotation (B) sur un trajet de circulation fermé en soi et qui pénètrent, sur une partie de la longueur de la piste de déplacement s'exécutant dans le sens de l'avance (A) du transporteur (4), dans le trajet de déplacement des récipients (6) sur le transporteur (4) et qui se trouvent, dans la partie restante du trajet de déplacement, à l'extérieur de ce trajet de déplacement, les éléments groupeurs (15) étant fixés en des distances mutuellement égales, sur un axe (26) de pivotement s'étendant perpendiculairement à la direction de déplacement (B) de l'élément (18) d'entraînement et pouvant pivoter sur cet élément (18) d'entraînement, les surfaces de butée ou de retenue étant à chaque fois prévues à une certaine distance radiale de cet axe (26) de pivotement sur les éléments groupeurs (15), chacun étant rigidement relié à un bras articulé (28) s'étendant radialement par rapport à l'axe (26) de pivotement, bras qui est en prise avec un élément (31) de réglage, de sorte que la distance (mesure de coin) déterminant la longueur des groupes (GL) entre les surfaces de butée ou de retenue se succédant sur la longueur partielle du trajet de rotation sans fin est réglable par modification des positions angulaires renfermant les doigts séparateurs ou groupeurs (17) à chaque fois au début et à la fin de la longueur partielle du trajet de rotation sans fin avec la direction d'avance (A), et, pour ce réglage de la longueur des groupes (GL), la position de l'élément régleur (31) par rapport à l'élément menant ou d'entraînement (18) pouvant être réglable, dispositif caractérisé en ce que l'élément régleur (31) présente au moins une came à courbe de commande (30) fermée, qui est disposée dans un plan parallèle au plan de la boucle de l'élément menant (18) et avec laquelle chaque bras articulé (28) est en contact par au moins une pièce de glissement ou un galet (29) de roulement ; en ce que l'élément régleur (31) présentant la came (30) de commande est prévu comme pouvant pivoter sur un bâti de machine du dispositif (7) de groupement ou d'une partie du transporteur (4) formant ce dispositif de groupement ; et en ce que l'axe de pivotement s'étend perpendiculairement au plan dans lequel est disposée la boucle formée par l'élément (18) d'entraînement.

2. Dispositif de groupement selon la revendication 1, caractérisé en ce que, par rapport à la direction de rotation (B) des éléments (15) de groupement ou de l'élément (18) d'entraînement, la pièce glissante ou le galet (29) de roulement est placé(e) derrière l' axe de pivotement (26) de l'élément groupeur (15) correspondant.

3. Dispositif de groupement selon la revendication 1 ou 2, caractérisé en ce que l'élément régleur (31) présentant la came (30) peut pivoter autour d'un axe (32) de pivotement qui coupe avantageusement la ligne médiane de la came (30).

4. Dispositif de groupement selon l'une des revendications 1 à 3, caractérisé en ce que sur le bâti de la machine sont prévus des moyens de réglage, avantageusement un dispositif (36) de réglage présentant une tige filetée (35) et/ou un moyen pour arrêter l'élément régleur (31), avantageusement au moins un dispositif de serrage (33, 34).

5. Dispositif de groupement selon l'une des revendications 1 à 4, caractérisé en ce que l'élément régleur (31) présentant la came (30) est un élément ayant essentiellement une forme de plaque.

6. Dispositif de groupement selon l'une des revendications 1 à 5, caractérisé en ce que la ligne médiane de la came (30) est coupée au moins deux fois, avantageusement quatre fois, par la projection de l'élément menant (18) ou de la boucle de cet élément menant (18) sur le plan de la came (30) et cela deux fois toujours dans la zone d'une entrée de récipient et/ou deux fois dans la zone d'une sortie de récipient du dispositif (7) de groupement.

7. Dispositif de groupement selon l'une des revendications 1 à 6, caractérisé en ce que la ligne médiane de la came (30) englobe au moins sur une longueur partielle la projection de l'élément menant (18) ou de la boucle formée par cet élément menant (18) dans la zone de l'entrée d'un récipient et/ou dans la zone de la sortie d'un récipient.

8. Dispositif de groupement selon l'une des revendications 1 à 7, caractérisé en ce que la ligne médiane de la came possède, dans la zone de l'entrée d'un récipient ainsi que dans la zone de la sortie du récipient, à chaque fois un tronçon incurvé (30'''', 30''') dont le tronçon (30''') a, à la sortie du récipient, avantageusement une forme qui est essentiellement celle d'un arc de cercle.

9. Dispositif de groupement selon la revendication 8, caractérisé en ce que l'axe de pivotement (32) de l'élément régleur (31) est prévu, dans le sens du déplacement de rotation (B),approximativement au début du tronçon incurvé (30''') de la ligne médiane de la came (30) à la sortie du récipient.

10. Dispositif de groupement selon l'une des revendications 1 à 9, caractérisé en ce que la boucle formée par l'élément menant (18) ainsi que la courbe fermée de la came (30) se situent à chaque fois dans des plans verticaux qui sont parallèles à la direction d'avance (A) du transporteur (4).

11. Dispositif de groupement selon la revendication 10, caractérisé en ce que l'élément menant (18) ainsi que la came de commande (30) sont disposés au-dessous d'un plan horizontal (TE) du transporteur (4), et en ce que les surfaces de butée ou de retenue ou les doigts groupeurs (17) à une extrémité de la longueur partielle du trajet de déplacement en circuit fermé pénètrent par-dessous dans le trajet de déplacement des récipients (6) et, à l'autre extrémité de la longueur partielle du trajet en boucle fermée, sortent vers le bas de ce trajet de déplacement.

12. Dispositif de groupement selon l'une des revendications 1 à 11, caractérisé en ce que les éléments menants sont formés par au moins deux chaînes (18) guidées sur un trajet fermé en soi et passant sur chaque fois au moins deux rouleaux ou roues (20, 21).

13. Dispositif de groupement selon l'une des revendications 1 à 12, caractérisé en ce que la came (30), présente en au moins un exemplaire sur l'élément régleur (31), est disposée dans un plan situé latéralement par rapport au trajet de déplacement en boucle fermée des éléments groupeurs (15).

14. Dispositif de groupement selon l'une des revendications 1 à 13, caractérisé en ce que l'élément régleur (31), présentant au moins une came (30), est prévu déplaçable ou réglable sur une paroi latérale (19) du dispositif (7) de groupement ou sur une partie du transporteur (4) formant ce dispositif (7) de groupement.
